# EUROPEAN PATENT APPLICATION

(11) **EP 3 943 560 A1**
(43) Date of publication of application: **26.01.2022**
(21) Application number: 20315360.6
(22) Date of filing: 24.07.2020
(51) Int. Cl.: C09D 11/18, C09D 11/16

(54) **WRITING GEL INK**

(71) Applicant: Société BIC, 92110 Clichy (FR)
(72) Inventor: CAFFIER, Guillaume, 68290 Wegscheid (FR); LIU, Wing Yam, 77144 Montevrain (FR)
(74) Representative: Peterreins Schley

(57) **Abstract**

The present disclosure relates to pens comprising a non-aqueous writing ink comprising a solvent, a coloring agent, a resin, a gelling agent, and a polyvinyl alcohol which is acetalized with an aldehyde comprising between 1 and about 6 carbon atoms, wherein the gelling agent is a mixture of silica particles and of a fatty acid amide wax, and wherein the polyvinyl alcohol which is acetalized with an aldehyde comprising between 1 and about 6 carbon atoms is present in amounts of between about 0.05 and about 1.0 wt.-%, relative to the total weight of the ink.

## Description

### Field of the Present Disclosure

The present disclosure concerns the field of writing instruments, in particular pens such as ball-pens, and writing ink for use in such writing instruments.

### Background of the Present Disclosure

Conventionally, ball pen inks are Newtonian high viscosity solvent based inks. Due to the use of glycols solvents of low volatility, ball pen inks are very stable during storage since the ink does not dry. Therefore, such inks can be used in pens without point protection. While such glycols solvent-based systems are desirable, they are typically also endowed with high shear viscosity. Again, high shear viscosity is per se not an undesirable property since it helps avoiding static leakage. Static leakage corresponds to the ink drop formation on the point when the pen is stored pointing downwards, especially in hot and humid condition. In a Newtonian system, the high shear viscosity also correlates with a viscosity at rest, and, thus, helps in reducing the problem of settling out of pigments and other solids which may clog the pen point. However, with high shear viscosities, the writing experience is not as smooth as the consumer would want. It turned out that balancing these properties was exceedingly difficult.

In order to solve these problems, the formulator turned to gel inks. Gel inks have a pseudoplastic rheological profile. In general gel inks are water based. They are a good compromise between low static leakage, smoothness and particles stabilization. However, they still suffer from several drawbacks:
Water is a light and volatile solvent. When stored without point protection (cap or hotmelt), the ink in the point can dry and clog the point. Moreover, the cap-off time of gel-ink based pens was found to be much lower as cap-off time of glycol-based ball pens.

Despite the use of corrosion inhibitors, water-based inks remain corrosive fluids. It is therefore impossible to use brass points and it is mandatory to use stainless steel points which are quite expensive materials and difficult to manufacture due to material hardness.

Furthermore, with water being a bad lubricant, it is also mandatory to use points with strong flow. For typical pens, it was found that the flow of a ball pen with a water-based ink could not be lowered to less than about 300 mg/200 m. This compares unfavorably to a glycol-based ink with about 35 mg/200 m. As a result, the mileage (i.e. total length of writing of the pen) of water-based ink pens is much lower than the mileage of glycol-based inks pens.

Glycol-based inks, or more generally solvent-based inks, for ball pens have also been described in the prior art. In particular, JP3078172 and JPH07-196972 describe the use of fatty acid amide wax in an oily ink composition as a thixotropic agent. However, use of fatty amid waxes alone is not sufficient to avoid the static leakage of the ink. In WO 2019/122017 A1, this technical problem is addressed by using a combination of fatty acid amide wax and silica particles are used as the gelling agent.

However, there is still room for further improvement of solvent-based inks for ink pens, in particular when it comes to balancing the rheological properties of the ink to achieve both excellent writing performance and avoiding leakage of the ink from the pen both after dynamic situations (e.g. after writing or after shock events such as dropping the pen) and in static situations (e.g. storing the pen on a shelf or storing the pen under heat and humidity such as encountered when keeping the pen close to the human body in a pocket). In particular, the problem of gooping, i.e. undesirable leakage from the pen tip immediately after writing, remains an issue.

### Summary of the Present Disclosure

In a first aspect, the present disclosure relates to a writing instrument. The writing instrument may be a pen, in particular a ball-pen. The writing instrument may contain a non-aqueous writing ink. The non-aqueous writing ink may comprise a solvent, a coloring agent, a resin, a gelling agent, and a polyvinyl alcohol which is acetalized with an aldehyde comprising between 1 and about 6 carbon atoms. The gelling agent may comprise a mixture of silica particles and of a fatty acid amide wax. The polyvinyl alcohol which is acetalized with an aldehyde comprising between 1 and about 6 carbon atoms may be present in amounts of between 0.05 and 1.0 wt.-%, relative to the total weight of the ink.

In some embodiments, the polyvinyl alcohol which is acetalized with an aldehyde comprising between 1 and about 6 carbon atoms

In some embodiments, the polyvinyl alcohol is acetalized with an aldehyde comprising 2 or 3, 2 to 4, or 2 to 5 carbon atoms.

In some embodiments, it may be particularly advantageous that the polyvinyl alcohol which is acetalized with an aldehyde comprising between 1 and about 6 carbon atoms is a polyvinybutyral.

In some embodiments, the polyvinyl alcohol which is acetalized with an aldehyde comprising between 1 and about 6 carbon atoms may be polyvinylbutyral having a weight-average molecular weight of above about 200 kDa, specifically between about 400 and about 2300 kDa, more specifically between about 450 and about 2000 kDa, and in particular between about 600 and about 1900 kDa.

In some embodiments, the amount by weight of the polyvinyl alcohol which is acetalized with an aldehyde comprising between 1 and about 6 carbon atoms, in particular polyvinylbutyral, may be lower than the amount by weight of the mixture of silica particles and of fatty acid amide wax.

In some embodiments, the silica particles may comprise hydrophilic silica particles. In some embodiments, the hydrophilic silica particles may be present in an amount of between about 0.10 and about 0.60 wt.-%, relative to the total weight of the ink.

In some embodiments, the fatty acid amide wax may comprise an N,N'-ethylene-bis-fatty acid amide. In some embodiments, it may be advantageous that the fatty acid amide wax may comprise an octadecanamide of the following formula (I)

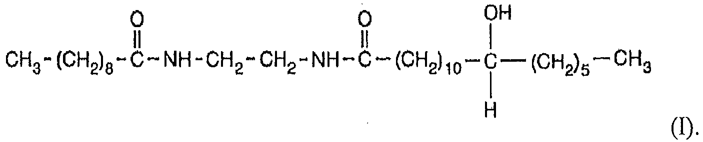

In some embodiments, the gelling agent may be present in amounts of between about 0.1 and about 1.2 wt.-%, more specifically between about 0.15 and about 0.60 wt.-%, relative to the total weight of the ink.

In some embodiments, the solvent may be selected from the group consisting of glycol ethers, alcohols, and mixture thereof. It may be advantageous that the solvent is selected from polyethylene glycol ethers, polypropylene glycol ethers, phenoxyethanol, 1-phenoxy-2-propanol, or mixtures thereof.

In some embodiments, the solvent may be present in amounts of between about 35 and about 80 wt.-%, relative to the total weight of the ink. In some embodiments, it may be advantageous that the solvent is present in amounts between about 45 and about 75 wt.-%, relative to the total weight of the ink.

In some embodiments, the coloring agent may be a dye, in particular a dye selected from the group consisting of azoic dyes, triarylmethane dyes, phthalocyanine derivatives dyes, xanthene dyes and mixture thereof.

In some embodiments, the coloring agent may be present in amounts of between about 5 and about 30 wt.-%, in particular between about 7 and about 28 wt.-%, relative to the total weight of the ink.

In some embodiments, the non-aqueous writing ink may further comprise one or more additives. In some embodiments, the additive may be a further gelling agent. In some embodiments, it may be advantageous that the non-aqueous writing ink further comprises one or more additives selected from the group consisting of thickening agents, clear drain agents, viscosity imparting agents, lubricants, dispersing agents and mixtures thereof.

In some embodiments, the non-aqueous writing ink may comprise in amounts relative to the total weight of the ink: between about 0.1 and about 1.0 wt.-% polyvinylbutyral having a weight-average molecular weight of between about 450 and about 2000 kDa; between about 0.15 and about 0.60 wt.-% of the fatty acid amide wax; and between about 0.15 and about 0.60 wt.-% hydrophilic silica.

In some embodiments, the non-aqueous writing ink may comprise a resin selected from polyester resins, polyurethane resins, ketone resins, ether resins, and mixtures thereof. It may be advantageous that the resin is a ketone resin. Additionally or alternatively, the resin may be present in an amount of between about 3 and about 30%, specifically between about 3 and about 25%, and in particular between about 5 to about 20%, relative to the total weight of the ink. Alternatively, the ink may comprise between about 55 and about 75 wt.-% of 1-phenoxy-2-propanol. It may also be advantageous that fatty acid amide wax of the non-aqueous writing ink comprises an N,N'-ethylene-bis-fatty acid amide, in particular an octadecanamide of the following formula (I)

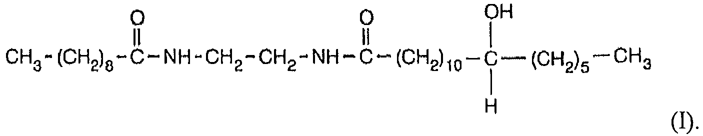

In some embodiments, the ink may have a loss factor tan δ at rest of between about 4 and about 25, more specifically between about 4 and about 12, and in particular between about 5 and about 10. Additionally or alternatively, the ink may have a loss factor after shear of between about 8 and about 60, more specifically between about 10 and about 50, and in particular between about 15 and about 40.

In some embodiments, the non-aqueous writing ink may consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 1.0 wt.-% polyvinylbutyral having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from resins and additives.

In some embodiments, the non-aqueous writing ink may comprise or may consist of the following components in amounts relative to the total weight of the ink: about 55 to about 75 wt.-% of the 1-phenoxy-2-propanol; about 10 to about 30 wt.-% of the coloring agent; about 0.10 to about 1.0 wt.-% polyvinylbutyral having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I) 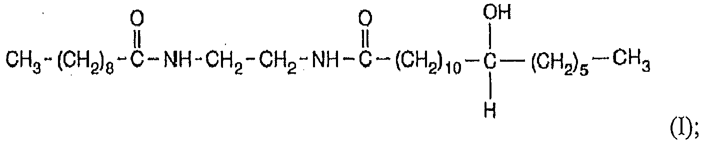 about 0.15 to about 0.60 wt.-% hydrophilic silica; about 5 to about 15 wt.-% of a resin; and the remainder of components being additives, in particular the additives defined above.

In a second aspect, the present disclosure relates to a non-aqueous writing ink comprising a solvent, a coloring agent, a resin, a gelling agent, and a polyvinyl alcohol which is acetalized with an aldehyde comprising between 1 and about 6 carbon atoms, wherein the gelling agent is a mixture of silica particles and of a fatty acid amide wax, and wherein the polyvinyl alcohol which is acetalized with an aldehyde comprising between 1 and about 6 carbon atoms is present in amounts of between about 0.05 and about 1.0 wt.-%, relative to the total weight of the ink.

The embodiments recited for the above first aspect of the disclosure are equally combinable with the aforementioned second aspect of the disclosure.

In a third aspect, the present disclosure relates a process of preparing the writing instrument according to the first aspect of the present disclosure or a non-aqueous writing ink according to second aspect of the present disclosure. The non-aqueous writing ink may be prepared by the following steps: a) Forming a first premix comprising silica particles in a solvent. The temperature in this step may be between about 30 and about 70°C. The first premix may be mixed with a shear rate of between about 20 and about 25 m/s. b) Combining the first premix with the remainder of the components of the non-aqueous writing ink.

In some embodiments, the non-aqueous writing ink may be prepared by the following steps: a) forming a first premix comprising silica particles in a solvent. The temperature in this step may be between about 30 and about 70°C. The first premix may be mixed with a shear rate of between about 20 and about 25 m/s; b) forming a second premix comprising fatty acid amide wax in a solvent. The temperature in this step may be between about 30 and about 70°C. The second premix may be mixed with a shear rate of between about 20 and about 25 m/s. c) Combining the first and second premixes with the remainder of the components of the non-aqueous writing ink.

The embodiments recited for the above first aspect of the disclosure are equally combinable with the aforementioned third aspect of the disclosure.

### Detailed Description of the Present Disclosure

Hereinafter, a detailed description will be given of the present disclosure. The terms or words used in the description and the claims of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In a first aspect, the present disclosure relates to a writing instrument. The writing instrument may be a pen, in particular a ball-pen. The writing instrument may contain a non-aqueous writing ink. In this context, non-aqueous means that the ink does not comprise water as a solvent for dyes/pigments and/or may be substantially free (e.g. containing less than about 2 wt.-% with respect to the total weight of the ink) or free of water.

The non-aqueous writing ink may comprise a solvent, a coloring agent, a resin, a gelling agent, and a polyvinyl alcohol which is acetalized with an aldehyde comprising between 1 and about 6 carbon atoms. The gelling agent may comprise a mixture of silica particles and of a fatty acid amide wax. It should be understood that the presence of further gelling agents is not excluded and that one or more further gelling agents can be optionally added to the ink.

The polyvinyl alcohol which is acetalized with an aldehyde comprising between 1 and about 6 carbon atoms may be present in amounts of between about 0.05 and about 1.0 wt.-%, more specifically between about 0.08 and about 0.8 wt.-%, even more specifically between about 0.1 wt.-% and about 0.6 wt.-%, and in particular between about 0.10 wt.-% and about 0.45 wt.-%, relative to the total weight of the ink. It was surprisingly found that the addition of a select polyvinyl alcohol which is acetalized with an aldehyde comprising between 1 and about 6 carbon atoms, in particular the addition of a polyvinylbutyral having a weight-average molecular weight of above about 200 kDa, specifically between about 400 and about 2300 kDa, more specifically between about 450 and about 2000 kDa, and in particular between about 600 and about 1900 kDa, to the aforementioned non-aqueous writing ink provides an exceptionally balanced writing and storage performance. Without wishing to be bound by theory, it is assumed that the fatty acid amide wax creates a gelling network with the solvent which is mediated by hydrogen bonds. Again without wishing to be bound by theory, the ability of polyvinyl alcohols which are acetalized with an aldehyde comprising between 1 and about 6 carbon atoms to accept hydrogen bonds from that gelling network while having a reduced ability (due to acetalization of hydroxyl groups) to contribute hydrogen bonds to the network itself is believed to introduce an "elasticity" to the ink that does not depend on the shear. This effect is believed to provide the aforementioned exceptionally balanced writing and storage performance.

In some embodiments, the polyvinyl alcohol which is acetalized with an aldehyde comprising between 1 and about 6 carbon atoms may have a weight-average molecular weight of above about 200 kDa, specifically between about 400 and about 2300 kDa, more specifically between about 450 and about 2000 kDa, and in particular between about 600 and about 1900 kDa.

In some embodiments, the polyvinyl alcohol which is acetalized with an aldehyde comprising between 1 and about 6 carbon atoms may be polyvinylbutyral. It may be advantageous that the polyvinylbutyral has a weight-average molecular weight of above about 200 kDa, specifically between about 400 and about 2300 kDa, more specifically between about 450 and about 2000 kDa, and in particular between about 600 and about 1900 kDa.

In some embodiments, it may be advantageous that the polyvinyl alcohol which is acetalized with an aldehyde comprising between 1 and about 6 carbon atoms, in particular polyvinylbutyral, is used in combination with a homo or copolymer of vinylpyrrolidone, in particular a polyvinylpyrrolidone. In such an embodiment these two polymers may be jointly present in amounts of between about 0.05 and about 1.0 wt.-%, more specifically between about 0.08 and about 0.8 wt.-%, even more specifically between about 0.1 wt.-% and about 0.6 wt.-%, and in particular between about 0.10 wt.-% and about 0.45 wt.-%, relative to the total weight of the ink. It may be advantages in such embodiments that the homo or copolymer of vinylpyrrolidone, in particular the polyvinylpyrrolidone, has a has a weight-average molecular weight of above about 200 kDa, specifically between about 400 and about 2300 kDa, more specifically between about 450 and about 2000 kDa, and in particular between about 600 and about 1900 kDa.

As indicated, the gelling agent may comprise a mixture of silica particles and of a fatty acid amide wax. The term "mixture" is not particularly limited and is intended to refer to any combination comprising silica particles and a fatty acid amide wax. In some embodiments, it may be advantageous to premix the silica particles and of a fatty acid amide wax. Suitable processes for doing this will be elaborated further below.

In some embodiments, the silica particles may comprise silica particles. It may be advantageous that the silica particles are hydrophilic silica particles. It may be advantageous that the silica particles are fumed silica particles, in particular hydrophilic fumed silica particles, such as the product sold by Evonik under the trade name AEROSIL^{®} 200.

In some embodiments, the non-aqueous writing ink may comprise dispersed silica particles or silica-based gel-like particles wherein the average particle size is less than about 1 µm, more specifically less than about 0.9 µm, in particular less than about 0.8 µm using dynamic light scattering (DLS) such as Malvern Zetasizer ZS.

The use of fatty acid amide waxes is well-established in the art as *i.a.* rheology-modifying agents. Suitable fatty acid residues may include aliphatic carboxylic acids having more than about 6 carbon atoms, in particular about 6 to about 24 carbon atoms, or about 6 to about 18 carbon atoms. Said aliphatic carboxylic acids may optionally be substituted, in particular with hydroxyl groups. Examples of suitable fatty acid residues include residues derived from caprylic acid, capric acid, lauric acid, myristic acid, palmitic acid, stearic acid, hydroxystearic acid, arachidic acid, and behenic acid.

In some embodiments, the fatty acid amide wax is a fatty acid diamide wax. The fatty acid diamide wax may comprise a fatty acid diamide comprising two fatty acid residues of about 6 or more carbon atoms, in particular of about 6 to about 24 carbon atoms, or about 6 to about 18 carbon atoms, which may optionally be substituted, in particular with hydroxyl groups. It may be advantageous that the fatty acid diamide wax comprises an N,N'-alkylene moiety having between 1 and about 12 carbon atoms, in particular between 1 and about 6 carbon atoms, in particular between about 2 to about 4 carbon atoms. It may be particularly advantageous that the fatty acid diamide wax comprises an N,N'-ethylene-bis-fatty acid amide, in particular wherein the two fatty acid residues independently of each other comprise about 6 or more carbon atoms, in particular about 6 to about 24 carbon atoms, or about 6 to about 18 carbon atoms. Each of the fatty acid residues may further and independently from each other be substituted, in particular with hydroxyl groups.

In some embodiments, it may be advantageous that the fatty acid amide wax may comprise 12-hydroxy-N-[2-[(1-oxooctyl)amino]ethyl]octadecanamide; N,N'-1,2-ethylene bis(12-hydroxy-octadecanamide); N,N'-1,2-ethylene bis(12-hydroxyoctadecanamide); N,N'-ethylene bis(12-hydroxystearamide); N,N'-ethylene bis(caprylamide), or mixtures thereof.

In some embodiments, it may be advantageous that the fatty acid amide wax may comprise an octadecanamide of the following formula (I)

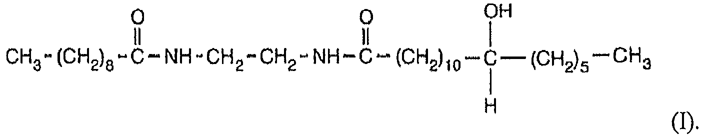

In some embodiments, the gelling agent may be present in amounts of between about 0.1 and about 1.2 wt.-%, more specifically between about 0.15 and about 0.60 wt.-%, relative to the total weight of the ink.

In some embodiments, the hydrophilic silica particles may be present in an amount of between about 0.10 and about 0.60 wt.-%, relative to the total weight of the ink.

In some embodiments, the fatty acid amide wax may be present in an amount of between about 0.10 and about 0.60 wt.-%, relative to the total weight of the ink.

In some embodiments, the amount by weight of the polyvinyl alcohol which is acetalized with an aldehyde comprising between 1 and about 6 carbon atoms, in particular polyvinylbutyral, may be lower than the amount by weight of the mixture of silica particles and of fatty acid amide wax.

The non-aqueous writing ink may comprise a solvent. The term "solvent" is not intended to be particularly limiting and also includes *i.a.* a medium which disperses or suspends solid components such as pigments. In some embodiments, the solvent may be selected from the group consisting of glycol ethers, alcohols, and mixture thereof. It may be advantageous that the solvent is selected from polyethylene glycol ethers, polypropylene glycol ethers, phenoxyethanol, 1-phenoxy-2-propanol, or mixtures thereof. In some embodiments, the alcohol is a alcohol having a high boiling point such as boiling point of above about 130°C, above about 150°C, or above about 200°C. In some embodiments, the alcohol may be selected form the group consisting of benzyl alcohol, ethylene glycol, diethylene glycol, propylene glycol, dipropylene glycol, trimethylene glycol, glycerin, and mixtures thereof. It may be particularly advantageous that the alcohol is benzyl alcohol. In another embodiment the solvent may be a glycol ether having a high boiling point such as boiling point of above about 130°C, above about 150°C, or above about 200°C. It may be advantageous that the glycol ether is selected from the group consisting of diethylene glycol monoethyl ether, diethylene glycol mono butyl ether, dipropylene glycol monobutyl ether, tripropylene glycol monomethyl ether, phenoxyethanol, phenoxypropanol, and mixtures thereof. It may be particularly advantageous that the glycol ether is selected from the group consisting of phenoxyethanol, 1-phenoxy-2-propanol and mixture thereof.

In some embodiments, the solvent may be present in amounts of between about 35 and about 80 wt.-%, relative to the total weight of the ink. In some embodiments, it may be advantageous that the solvent is present in amounts between about 45 and about 75 wt.-%, relative to the total weight of the ink.

In some embodiments, it may be advantageous that the ink comprises between about 55 and about 75 wt.-% of 1-phenoxy-2-propanol.

In some embodiments, the coloring agent may be a dye, a pigment, or mixtures thereof, in particular a dye or pigment selected from the group consisting of azoic dyes, triarylmethane dyes, phthalocyanine derivative dyes, xanthene dyes and mixture thereof. In some embodiments, the colorant may be a pigment.

Examples of a dye usable in the ink according to the present disclosure include the following: VARIFAST Black 3806 (C.I. Solvent Black 29), 3807 (trimethyl benzyl ammonium salt of C.I. Solvent Black 29), Spirit Black SB (C.I. Solvent Black 5), SPIRON Black GMH (C.I. Solvent Black 43), Solvent Black 46 (salt forming from of C.I. Basic Violet 3 and Acid Yellow 36), VARIFAST Red 1308 (salt forming form of C.I. Basic Red 1 dye and C.I. Acid Yellow 23 dye), Solvent Red 49, VARIFAST Yellow AUM (salt forming form of C.I. Basic Yellow 2 dye and C.I. Acid Yellow 42 dye), SPIRON Yellow C2 GH (organic acid salt of C.I. Basic Yellow 2), SPIRON Violet CRH (C.I. Solvent Violet 8-1), VARIFAST Violet 1701 (salt forming form of C.I. Basic Violet 1 and C.I. Acid Yellow 42 dye), SPIRON Red CGH (organic acid salt of C.I. Basic Red 1), SPIRON Pink BH (C.I. Solvent Red 82), Nigrosine Base EX (C.I. Solvent Black 7), Oil Blue 613 (C.I. Solvent Blue 5), and Neozapon Blue 808 (C.I. Solvent Blue 70).

In some embodiments, the coloring agent may be a dye and may be selected from also a salt-forming dye and mixtures thereof, such as: Solvent Black 46 (salt forming from of C.I. Basic Violet 3 and Acid Yellow 36), VARIFAST Red 1308 (salt forming form of C.I. Basic Red 1 dye and C.I. Acid Yellow 23 dye), VARIFAST Yellow AUM (salt forming form of C.I. Basic Yellow 2 dye and C.I. Acid Yellow 42 dye), VARIFAST Violet 1701 (salt forming form of C.I. Basic Violet 1 and C.I. Acid Yellow 42 dye).

Examples of a pigments usable in the ink according to the present disclosure include organic, inorganic and processed pigments. Thus, the pigment may for example be an inorganic pigment such as a carbon black, ultramarine and titanium dioxide pigment, an organic pigment such as an azo-based pigment, phthalocyanine-based pigment, indigo pigment, thioindigo pigment, thren-based pigment, quinacridone-based pigment, anthraquinone-based pigment, thron-based pigment, diketopyrrolopyrrole-based pigment, dioxazine-based pigment, perylene-based pigment, perinone-based pigment and isoindolinone-based pigment, a metal pigment such as an aluminum powder or aluminum powder whose surface is treated with a colored resin, a metal gloss pigment obtained by forming a metal vapor deposition film such as that of aluminum on a transparent or colored transparent film, a metal pigment having a thickness of about 0.01 to about 0.1 µm obtained by peeling a metal vapor deposition film such as that of aluminum formed on a substrate such as a film, a colloidal particle having a mean particle size of about 5 to about 30 nm selected from gold, silver, platinum and copper, a fluorescent pigment, light-storing pigment, pearl pigment obtained by coating the surface of a core which is a naturally occurring mica, synthetic mica, glass flake, alumina and transparent film with a metal oxide such as titanium oxide, and the like.

In some embodiments, the coloring agent may be present in amounts of between about 5 and about 30 wt.-%, in particular between about 7 and about 28 wt.-%, relative to the total weight of the ink.

In some embodiments, the non-aqueous writing ink may further comprise one or more additives. In some embodiments, the additive may be a further gelling agent. In some embodiments, it may be advantageous that the non-aqueous writing ink further comprises one or more additives. In some embodiments, the additives may be selected from the group consisting of thickening agents, clear drain agents, viscosity imparting agents, lubricants, dispersing agents and mixtures thereof.

In some embodiments, the non-aqueous writing ink may comprise in amounts relative to the total weight of the ink: between about 0.1 and about 1.0 wt.-% polyvinylbutyral having a weight-average molecular weight of between about 450 and about 2000 kDa; between about 0.15 and about 0.60 wt.-% of the fatty acid amide wax; and between about 0.15 and about 0.60 wt.-% hydrophilic silica.

The non-aqueous writing ink may comprise a resin. The resin may impart viscosity to the ink and/or may act as a binder. It may be a natural or synthetic resin. The resin may comprise a polyester resin; a polyurethane resin; a ketone resin such as a ketone-formaldehyde resin such as an acetophenone-formaldehyde modified resin; an ether resin; a vinyl resin, such as a vinyl chloride copolymer, polyvinyl butyral, a polyvinyl acetate, vinyl acetate copolymer, or a polyvinyl alcohol resin; an acrylic resin; a styrene-acrylic resin; a styrene-maleic acid copolymer resin; a rosin-maleic acid copolymer resin; a phenol resin; a cellulosic resin; an amid resin, an alkyd resin, a rosin-modified resin, a rosin-modified phenol resin; a xylene resin; a polyacetal resin; a terpene resin; a phenoxy resin; or a mixture thereof. In some embodiments, it may be advantageous that the resin selected from polyester resins, polyurethane resins, ketone resins, ether resins, and mixtures thereof. It may be particularly advantageous that the resin is a ketone resin.

In some embodiments, the resin may be present in an amount of between about 3 and about 30%, specifically between about 3 and about 25%, and in particular between about 5 to about 20%, relative to the total weight of the ink.

In some embodiments, the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 0.60 wt.-% polyvinylbutyral having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives.

In some embodiments, the non-aqueous writing ink may comprise or may comprise or consist of the following components in amounts relative to the total weight of the ink: about 55 to about 75 wt.-% of the 1-phenoxy-2-propanol; about 10 to about 30 wt.-% of the coloring agent; about 0.10 to about 0.60 wt.-% polyvinylbutyral having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I) 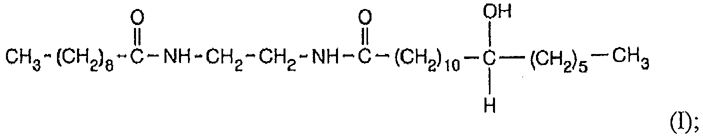 about 0.15 to about 0.60 wt.-% hydrophilic silica; about 5 to about 15 wt.-% of resin; and the remainder of components being additives, in particular the additives defined above.

In some embodiments, the non-aqueous writing ink may have a viscosity at rest at about 20 °C of between about 30 000 cps and about 150 000 cps, more specifically between about 40 000 cps and about 120 000 cps, and in particular between about 50 000 cps and about 100 000 cps. The viscosity at rest may be measured at about 20°C with a cone-and-plate rheometer such as a rheometer by Malvern Kinexus with a cone of about 40 mm and an angle of about 4° with a shear rate of 0.01 s⁻¹.

In some embodiments, the non-aqueous writing ink may have a viscosity under shear at about 100 s⁻¹ at about 20 °C of between about between about 1200 cps and about 10 000 cps, more specifically between about 1300 cps and about 5 000 cps, and in particular between about 1500 cps and about 4000 cps. The viscosity under shear may be measured at about 20°C with a cone-and-plate rheometer such as a rheometer by Malvern Kinexus with a cone of about 40 mm and an angle of about 4° with a shear rate of 100 s⁻¹.

In some embodiments, the non-aqueous writing ink may have a loss factor tan δ at rest of between about 3 and about 15, more specifically between about 4 and about 12, and in particular between about 5 and about 10. The loss factor tan δ at rest may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa).

In some embodiments, the non-aqueous writing ink may have a loss factor tan after shear of between about 8 and about 60, more specifically between about 11 and about 50, and in particular between about 15 and about 40. The loss factor tan δ after shear may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa) after pre-shearing the sample (to simulate the writing process) for about 30 seconds at about 1000 s⁻¹.

In a second aspect, the present disclosure relates to a non-aqueous writing ink comprising a solvent, a coloring agent, a resin, a gelling agent, and a polyvinyl alcohol which is acetalized with an aldehyde comprising between 1 and about 6 carbon atoms, wherein the gelling agent is a mixture of silica particles and of a fatty acid amide wax, and wherein the polyvinyl alcohol which is acetalized with an aldehyde comprising between 1 and about 6 carbon atoms is present in amounts of between about 0.05 and about 1.0 wt.-%, relative to the total weight of the ink.

The embodiments recited for the above first aspect of the disclosure are equally combinable with the aforementioned second aspect of the disclosure. In particular, it may be advantageous that the non-aqueous writing ink may comprise or consist of the following components in amounts relative to the total weight of the ink: about 55 to about 75 wt.-% of the solvent is selected from a polyethylene glycol ether, a polypropylene glycol ether, phenoxyethanol, 1-phenoxy-2-propanol, or mixtures thereof; about 10 to about 30 wt.-% of the coloring agent; about 0.10 to about 1.0 wt.-% polyvinylbutyral having a weight-average molecular weight of between about 600 and about 1900 kDa; about 0.15 to about 0.60 wt.-% fatty acid amide wax; about 0.15 to about 0.60 wt.-% hydrophilic silica; and the remainder of components being selected from the resins and additives. More specifically, it may be advantageous that the non-aqueous writing ink may comprise or consist of the following components in amounts relative to the total weight of the ink: about 55 to about 75 wt.-% of the 1-phenoxy-2-propanol; about 10 to about 30 wt.-% of the coloring agent; about 0.10 to about 1.0 wt.-% polyvinylbutyral having a weight-average molecular weight of between about 600 and about 1900 kDa; about 0.15 to about 0.60 wt.-% fatty acid amide wax comprising a N,N'-ethylene-bis-fatty acid amide, in particular a N,N'-ethylene-bis-fatty acid amide having the following formula (I) 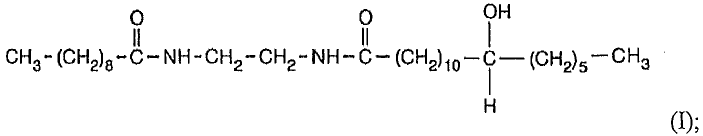 about 0.15 to about 0.60 wt.-% hydrophilic silica; about 5 to about 15 wt.-% of resin; and the remainder of components being additives, in particular the additives defined above.

In a third aspect, the present disclosure relates a process of preparing the writing instrument according to the first aspect of the present disclosure or a non-aqueous writing ink according to second aspect of the present disclosure. The process is not particularly limited.

Accordingly, in some embodiments, the non-aqueous writing ink may be prepared by the following steps: In one step, a first premix comprising silica particles in a solvent is formed. The temperature in this step may be between about 30 and about 70°C. The first premix may be mixed with a shear rate of between about 20 and about 25 m/s. In another step, a second premix comprising fatty acid amide wax in a solvent is formed. The temperature in this step may be between about 30 and about 70°C. It should be understood that the steps of forming the first premix can be performed with only a part of the solvent contained in the final writing ink. Then, the first premix may be combined with the remainder of the components of the writing ink.

However, in some embodiments, it may be advantageous that the fatty acid amide wax is activated by formation of a premix in a solvent (second premix), advantageously the solvent as described above for the ink, in particular a glycol ether, before its addition in the writing ink containing the (remainder of the) solvent and the coloring agent, the silica particles and optionally additives. Without wishing to be bound by theory, it is believed that such activation may allow the spreading of the fatty acid amide wax and therefore the obtaining of a stronger gel network. Advantageously the activation step (formation of a premix) may be carried out at a precise temperature and shear stress.

Accordingly, in some embodiments, the non-aqueous writing ink may be prepared by the following steps: In one step, a first premix comprising silica particles in a solvent is formed. The temperature in this step may be between about 30 and about 70°C. The first premix may be mixed with a shear rate of between about 20 and about 25 m/s. In another step, a second premix comprising fatty acid amide wax in a solvent is formed. The temperature in this step may be between about 30 and about 70°C. The second premix may be mixed with a shear rate of between about 20 and about 25 m/s. It should be understood that the steps of forming the first and second premixes can be performed with only a part of the solvent contained in the final writing ink. Then, the first and second premixes may be combined with the remainder of the components of the writing ink.

In order to obtain a premix, a rotor-stator disperser can be used. The activation of the fatty acid amide wax may be observed by measuring viscosity at rest of the premix. When activation is complete, viscosity at rest is maximal (spreading the fatty acid amide wax increases the viscosity at rest).

The embodiments recited for the above first aspect of the disclosure are equally combinable with the aforementioned third aspect of the disclosure.

In the following the present disclosure will be further elaborated by way of Examples.

### Example 1

Following non-aqueous writing ink can be prepared:

| Component | Primary Function | Content in wt. % |
|---|---|---|
| Organo modified polysiloxane (Tego Airex 900) | Defoamer | 0.05% |
| Solvent Red 49 | Dye | 2.5% |
| Solvent Black 46 at 50% in phenoxyethanol | Dye | 30% |
| Sorbitan sesquioleate (Lonzest SOC) | Additive (clear drain) | 1.3% |
| Resin acetophenone formaldehyde modified (SK resin) | Binder (Newtonian) | 12.5% |
| Hydrophilic silica (Aerosil 200 at 10% in 1-phenoxy-2-propanol) | Silica (part of gelling system) | 4% |
| Polyvinybutyral (Butvar by Eastman) | Elastic agent | 0.15% |
| Polyamide wax (Crayvallac Super at 4% in 1-phenoxy-2-propanol) | Fatty acid amide wax (part of gelling system) | 6.5% |
| 1-phenoxy-2-propanol | Solvent | ad 100 % |
| Total | | 100 |

Further embodiments according to the present disclosure are listed below:
1. A writing instrument, in particular a pen such as a ball-pen, containing a non-aqueous writing ink which comprises a solvent, a coloring agent, a resin, a gelling agent, and a polyvinyl alcohol which is acetalized with an aldehyde comprising between 1 and about 6 carbon atoms,
   wherein the gelling agent comprises a mixture of silica particles and of a fatty acid amide wax, and
   wherein the polyvinyl alcohol which is acetalized with an aldehyde comprising between 1 and about 6 carbon atoms is present in amounts of between about 0.05 and about 1.0 wt.-%, relative to the total weight of the ink.
2. The writing instrument of clause 1, wherein the polyvinyl alcohol is acetalized with an aldehyde comprising 2, 2 or 3, 2 to 4 or 2 to 5 carbon atoms, and in particular wherein the polyvinyl alcohol which is acetalized with an aldehyde comprising between 1 and about 6 carbon atoms is a polyvinylbutyral.
3. The writing instrument of clause 2, wherein the polyvinyl alcohol which is acetalized with an aldehyde comprising between 1 and about 6 carbon atoms , in particular the polyvinybutyral, has a weight-average molecular weight of above about 200 kDa, specifically between about 400 and about 2300 kDa, more specifically between about 450 and about 2000 kDa, and in particular between about 600 and about 1900 kDa.
4. The writing instrument of any one of clauses 1 to 3, wherein the amount by weight of the polyvinyl alcohol which is acetalized with an aldehyde comprising between 1 and about 6 carbon atoms is lower than the amount by weight of the mixture of silica particles and of a fatty acid amide wax.
5. The writing instrument of any one of clauses 1 to 4, wherein the silica particles comprise hydrophilic silica particles, and in particular wherein the hydrophilic silica particles are present in an amount of between about 0.10 and about 0.60 wt.-%, relative to the total weight of the ink.
6. The writing instrument of any one of clauses 1 to 5, wherein the fatty acid amide wax comprises an N,N'-ethylene-bis-fatty acid amide, in particular an octadecanamide of the following formula (I) 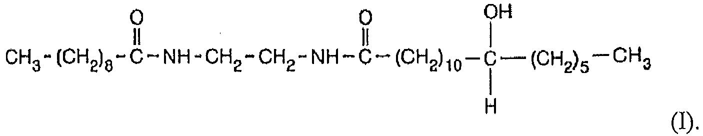
7. The writing instrument of any one of clauses 1 to 6, wherein the gelling agent is present in amounts of between about 0.1 and about 1.2 wt.-%, more specifically between about 0.15 and about 0.60 wt.-%, relative to the total weight of the ink.
8. The writing instrument of any one of clauses 1 to 7, wherein the solvent is selected from the group consisting of glycol ethers, alcohols, and mixture thereof; more specifically wherein the solvent is a polyethylene glycol ether, a polypropylene glycol ether, phenoxyethanol, 1-phenoxy-2-propanol, or mixtures thereof.
9. The writing instrument of any one of clauses 1 to 8, wherein the solvent is present in amounts of between about 35 and about 80 wt.-%, more specifically between about 45 and about 75 wt.-%, relative to the total weight of the ink.
10. The writing instrument of any one of clauses 1 to 9, wherein the coloring agent is a dye, in particular a dye selected from the group consisting of azoic dyes, triarylmethane dyes, phthalocyanine derivatives dyes, xanthene dyes and mixture thereof.
11. The writing instrument of any one of clauses 1 to 10, wherein the coloring agent is present in amounts of between about 5 and about 30 wt.-%, in particular between about 7 and about 28 wt.-%, relative to the total weight of the ink.
12. The writing instrument of any one of clauses 1 to 11, wherein the non-aqueous writing ink further comprises one or more additives, in particular one or more additives selected from the group consisting of thickening agents, clear drain agents, viscosity imparting agents, lubricants, dispersing agents and mixture thereof.
13. The writing instrument of any one of clauses 1 to 12, wherein the non-aqueous writing ink which comprises in amounts relative to the total weight of the ink:
   between about 0.1 and about 1.0 wt.-% polyvinylbutyral having a weight-average molecular weight of between about 450 and about 2000 kDa;
   between about 0.15 and about 0.60 wt.-% of the fatty acid amide wax; and
   between about 0.15 and about 0.60 wt.-% hydrophilic silica.
14. The writing instrument of any one of clauses 1 to 13, wherein the non-aqueous writing ink comprises a resin selected from polyester resins, polyurethane resins, ketone resins, ether resins, and mixtures thereof; and wherein the resin is optionally present in an amount of between about 3 and about 30%, specifically between about 3 and about 25%, and in particular between about 5 to about 20%, relative to the total weight of the ink.
15. The writing instrument of clause 14, wherein the ink comprises between about 55 and about 75 wt.-% of 1-phenoxy-2-propanol.
16. The writing instrument of any one of clauses 1 to 15, wherein the fatty acid amide wax comprises an N,N'-ethylene-bis-fatty acid amide, in particular an octadecanamide of the following formula (I) 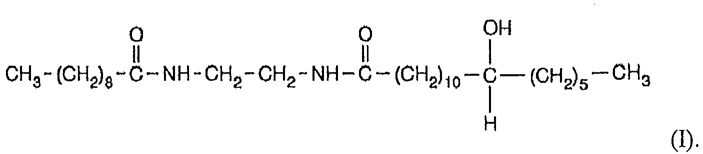
17. The writing instrument of any one of clauses 1 to 16, wherein the ink has a loss factor tan δ at rest of between about 4 and about 25, more specifically between about 4 and about 12, and in particular between about 5 and about 10, in particular a loss factor after shear of between about 8 and about 60, more specifically between about 10 and about 50, and in particular between about 15 and about 40.
18. The writing instrument of any one of clauses 1 to 17, wherein the non-aqueous writing ink which consists the following components in amounts relative to the total weight of the ink:
   about 55 to about 75 wt.-% of the solvent is selected from a polyethylene glycol ether, a polypropylene glycol ether, phenoxyethanol, 1-phenoxy-2-propanol, or mixtures thereof;
   about 10 to about 30 wt.-% of the coloring agent;
   about 0.10 to about 1.0 wt.-% polyvinylbutyral having a weight-average molecular weight of between about 600 and about 1900 kDa;
   about 0.15 to about 0.60 wt.-% fatty acid amide wax;
   about 0.15 to about 0.60 wt.-% hydrophilic silica;
   and the remainder of components being selected from resins and additives.
19. The writing instrument of clause 18, wherein the non-aqueous writing ink which comprises the following components in amounts relative to the total weight of the ink:
   about 55 to about 75 wt.-% of the 1-phenoxy-2-propanol;
   about 10 to about 30 wt.-% of the coloring agent;
   about 0.10 to about 1.0 wt.-% polyvinylbutyral having a weight-average molecular weight of between about 600 and about 1900 kDa;
   about 0.15 to about 0.60 wt.-% fatty acid amide wax comprises a N,N'-ethylene-bis-fatty acid amide, in particular a N,N'-ethylene-bis-fatty acid amide having the following formula (I) 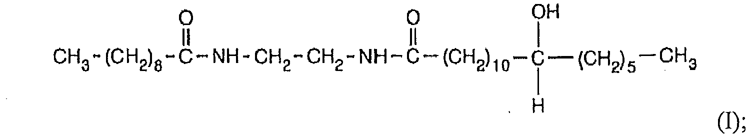
   about 0.15 to about 0.60 wt.-% hydrophilic silica;
   about 5 to about 15 wt.-% of a resin; and
   the remainder of components being additives.
20. A non-aqueous writing ink comprising a solvent, a coloring agent, a resin, a gelling agent, and a polyvinyl alcohol which is acetalized with an aldehyde comprising between 1 and about 6 carbon atoms, wherein the gelling agent is a mixture of silica particles and of a fatty acid amide wax, and wherein the polyvinyl alcohol which is acetalized with an aldehyde comprising between 1 and about 6 carbon atoms is present in amounts of between about 0.05 and about 1.0 wt.-%, relative to the total weight of the ink.
21. A process of preparing the writing instrument of any one of clauses 1 to 19 or the non-aqueous writing ink according to clause 20, wherein a non-aqueous writing ink comprising a solvent, a coloring agent, a resin, a gelling agent, and a polyvinyl alcohol which is acetalized with an aldehyde comprising between 1 and about 6 carbon atoms, wherein the gelling agent comprises a mixture of silica particles and of a fatty acid amide wax, and wherein the polyvinyl alcohol which is acetalized with an aldehyde comprising between 1 and about 6 carbon atoms is present in amounts of between 0.05 and 1.0 wt.-%, relative to the total weight of the ink; is prepared by:
   a) forming a first premix comprising silica particles in a solvent at a temperature of between about 30 and about 70°C with a shear rate of between about 20 and about 25 m/s;
   b) combining the first premix with the remainder of the components of the non-aqueous writing ink.

Although specific embodiments of the present disclosure have been disclosed for illustrative purposes, those skilled in the art will appreciate that various modifications and alterations are possible, without departing from the spirit of the present disclosure. It is also to be understood that such modifications and alterations are incorporated in the scope of the present disclosure and the accompanying claims.

## Claims

1. A writing instrument, in particular a pen such as a ball-pen, containing a non-aqueous writing ink which comprises a solvent, a coloring agent, a resin, a gelling agent, and a polyvinyl alcohol which is acetalized with an aldehyde comprising between 1 and about 6 carbon atoms,
wherein the gelling agent comprises a mixture of silica particles and of a fatty acid amide wax, and
wherein the polyvinyl alcohol which is acetalized with an aldehyde comprising between 1 and about 6 carbon atoms is present in amounts of between about 0.05 and about 1.0 wt.-%, relative to the total weight of the ink.

2. The writing instrument of claim 1, wherein the polyvinyl alcohol is acetalized with an aldehyde comprising 2, 2 or 3, 2 to 4 or 2 to 5 carbon atoms, and in particular wherein the polyvinyl alcohol which is acetalized with an aldehyde comprising between 1 and about 6 carbon atoms is a polyvinylbutyral.

3. The writing instrument of claim 2, wherein the polyvinyl alcohol which is acetalized with an aldehyde comprising between 1 and about 6 carbon atoms , in particular the polyvinybutyral, has a weight-average molecular weight of above about 200 kDa, specifically between about 400 and about 2300 kDa, more specifically between about 450 and about 2000 kDa, and in particular between about 600 and about 1900 kDa.

4. The writing instrument of any one of claims 1 to 3, wherein the amount by weight of the polyvinyl alcohol which is acetalized with an aldehyde comprising between 1 and about 6 carbon atoms is lower than the amount by weight of the mixture of silica particles and of a fatty acid amide wax.

5. The writing instrument of any one of claims 1 to 4, wherein the silica particles comprise hydrophilic silica particles, and in particular wherein the hydrophilic silica particles are present in an amount of between about 0.10 and about 0.60 wt.-%, relative to the total weight of the ink.

6. The writing instrument of any one of claims 1 to 5, wherein the fatty acid amide wax comprises an N,N'-ethylene-bis-fatty acid amide, in particular an octadecanamide of the following formula (I)

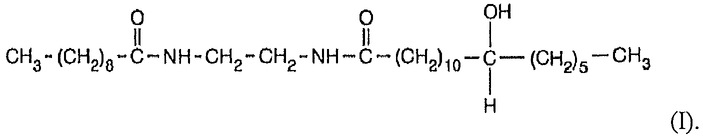

7. The writing instrument of any one of claims 1 to 6, wherein the gelling agent is present in amounts of between about 0.1 and about 1.2 wt.-%, more specifically between about 0.15 and about 0.60 wt.-%, relative to the total weight of the ink.

8. The writing instrument of any one of claims 1 to 7, wherein the solvent is selected from the group consisting of glycol ethers, alcohols, and mixture thereof; more specifically wherein the solvent is a polyethylene glycol ether, a polypropylene glycol ether, phenoxyethanol, 1-phenoxy-2-propanol, or mixtures thereof.

9. The writing instrument of any one of claims 1 to 8, wherein the non-aqueous writing ink which comprises in amounts relative to the total weight of the ink: between about 0.1 and about 1.0 wt.-% polyvinylbutyral having a weight-average molecular weight of between about 450 and about 2000 kDa;
between about 0.15 and about 0.60 wt.-% of the fatty acid amide wax; and
between about 0.15 and about 0.60 wt.-% hydrophilic silica.

10. The writing instrument of any one of claims 1 to 9, wherein the non-aqueous writing ink comprises a resin selected from polyester resins, polyurethane resins, ketone resins, ether resins, and mixtures thereof; and wherein the resin is optionally present in an amount of between about 3 and about 30%, specifically between about 3 and about 25%, and in particular between about 5 to about 20%, relative to the total weight of the ink.

11. The writing instrument of any one of claims 1 to 10, wherein the fatty acid amide wax comprises an N,N'-ethylene-bis-fatty acid amide, in particular an octadecanamide of the following formula (I)

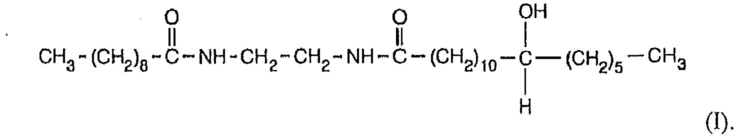

12. The writing instrument of any one of claims 1 to 11, wherein the ink has a loss factor tan δ at rest of between about 4 and about 25, more specifically between about 4 and about 12, and in particular between about 5 and about 10, in particular a loss factor after shear of between about 8 and about 60, more specifically between about 10 and about 50, and in particular between about 15 and about 40.

13. The writing instrument of any one of claims 1 to 12, wherein the non-aqueous writing ink which comprises the following components in amounts relative to the total weight of the ink:
about 55 to about 75 wt.-% of the 1-phenoxy-2-propanol;
about 10 to about 30 wt.-% of the coloring agent;
about 0.10 to about 1.0 wt.-% polyvinylbutyral having a weight-average molecular weight of between about 600 and about 1900 kDa;
about 0.15 to about 0.60 wt.-% fatty acid amide wax comprises a N,N'-ethylene-bis-fatty acid amide, in particular a N,N'-ethylene-bis-fatty acid amide having the following formula (I) 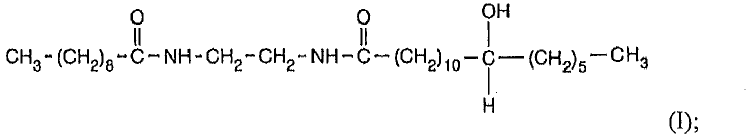
about 0.15 to about 0.60 wt.-% hydrophilic silica;
about 5 to about 15 wt.-% of a resin; and
the remainder of components being additives.

14. A non-aqueous writing ink comprising a solvent, a coloring agent, a resin, a gelling agent, and a polyvinyl alcohol which is acetalized with an aldehyde comprising between 1 and about 6 carbon atoms, wherein the gelling agent is a mixture of silica particles and of a fatty acid amide wax, and wherein the polyvinyl alcohol which is acetalized with an aldehyde comprising between 1 and about 6 carbon atoms is present in amounts of between about 0.05 and about 1.0 wt.-%, relative to the total weight of the ink.

15. A process of preparing the writing instrument of any one of claims 1 to 13 or the non-aqueous writing ink according to claim 14, wherein a non-aqueous writing ink comprising a solvent, a coloring agent, a resin, a gelling agent, and a polyvinyl alcohol which is acetalized with an aldehyde comprising between 1 and about 6 carbon atoms, wherein the gelling agent comprises a mixture of silica particles and of a fatty acid amide wax, and wherein the polyvinyl alcohol which is acetalized with an aldehyde comprising between 1 and about 6 carbon atoms is present in amounts of between 0.05 and 1.0 wt.-%, relative to the total weight of the ink; is prepared by:
a) forming a first premix comprising silica particles in a solvent at a temperature of between about 30 and about 70°C with a shear rate of between about 20 and about 25 m/s;
b) combining the first premix with the remainder of the components of the non-aqueous writing ink.
